# EUROPEAN PATENT APPLICATION

(11) **EP 1 842 615 A2**
(43) Date of publication of application: **10.10.2007**
(21) Application number: 07104143.8
(22) Date of filing: 14.03.2007
(51) Int. Cl.: B23H 7/02

(54) **Wire electric discharge machine**

(30) Priority: 04.04.2006 JP 2006103548
(71) Applicant: Fanuc Ltd, Minamitsuru-gun, Yamanashi 401-0597 (JP)
(72) Inventor: Kita, Yuki Room 10-203 Fanuc Manshonharimomi, Yamanashi 401-0511 (JP); Yamane, Hikura Room 10-301 Fanuc Manshonharimomi, Yamanashi 401-0511 (JP); Okuda, Shinji Room 12-304 Fanuc Manshonharimomi, Yamanashi 401-0511 (JP)
(74) Representative: Billington, Lawrence Emlyn

(57) **Abstract**

A lower arm (3) is passed through a slot in a machining tank (2). The slot of the machining tank is provided with a seal section for sealing with a plate-shaped seal member (7a). The movable table is moved by a servomotor (4). The machining tank (2) and a workpiece are fixed on the movable table. At the seal section, a seal member (7a) on the machining tank side slides with respect to the plate-shaped seal member, thereby generating a sliding resistance. This sliding resistance increases as a sludge produced by electric discharge adheres to the seal section, thereby distorting the lower arm and influencing the machining accuracy. Accordingly, a load that acts on the servomotor is detected, and a sliding resistance load at the seal section is obtained. When a reference load is exceeded by the detected resistance load, arrival of the seal section at the timing for maintenance is displayed and notified.

## Description

### BACKGROUND OF THE INVENTION

### Field of the Invention

The present invention relates to a wire electric discharge machine, and more particularly, to maintenance of a seal section of a machining tank.

### Description of the Related Art

In a wire electric discharge machine, a dipping process is generally performed such that a workpiece is machined in a machining fluid in order to improve the machining speed and accuracy.

The dipping process requires a machining tank to hold the machining fluid (water) in which the workpiece is dipped. Usually, upper and lower wire guides that support a wire electrode are located above and below the workpiece, respectively, and the electrode is stretched between the wire guides. The wire electrode is run as voltage is applied between the electrode and the workpiece, and the workpiece is moved relatively to the electrode as it is subjected to electric discharge machining.

An upper arm and a lower arm that are provided individually with the wire guides are located above and below the workpiece, respectively, and a drive mechanism is provided for moving the workpiece and the machining tank in two directions (X- and Y-axis directions) perpendicular to the stretching direction (Z-axis direction) of the wire electrode. The distal end (on which the lower guide is disposed) of the lower arm that is provided with the lower wire guide for guiding the wire electrode must be situated in the machining tank, and the lower arm can move relatively to the tank. Therefore, one side plate of the machining tank is formed with a slot, through which the lower arm is passed, and provided with sealing means for preventing the machining fluid from leaking out through the slot.

In general, the sealing means is composed of a machining-tank-side seal member of a low-friction material and a plate-shaped seal member, which are opposed to each other. The tank-side seal member is located around the slot of the machining tank, while the plate-shaped seal member covers the slot. These two seal members can prevent leakage of the machining fluid when they are brought into contact with each other. However, sliding friction is generated as the machining tank and the lower arm move relatively to each other. This sliding friction impedes the positioning accuracy of the workpiece, which moves together with the tank, with respect to the wire electrode, thereby reducing the machining accuracy.

There is a known method (see Japanese Patent Application Laid-Open No. 7-132418) for stopping the leakage of the machining fluid that is attributable to an error in thickness or warp of the sealing means, thereby preventing reduction of the machining accuracy. According to this method, seal retaining means is provided for pressing the seal members against the machining tank under controlled pressure. A load on a movable table drive mechanism for driving a movable table, which is mounted with the workpiece and the machining tank, is detected, and the retaining force of the seal retaining means that presses the seal section against the machining tank is controlled based on the detected load. Alternatively, an amount of deformation of the lower arm that projects into the tank is detected, and the retaining force of the seal retaining means is controlled in accordance with the detected deformation amount.

If the electric discharge machining is carried out in the machining fluid, moreover, sludge with particle diameters of several micrometers scatters from the electrode wire and the workpiece and floats in the water. If the sludge gets into a narrow gap between the opposed seal members in contact with each other, therefore, the frictional resistance increases and exerts a bad influence on the positioning accuracy.

A method (see Japanese Patent Application Laid-Open No. 4-159023 and International Publication WO 01/062423) is known in which a nozzle for jetting the machining fluid is located in a gap in the sliding position of the seal section, whereby leakage of the machining fluid through the seal section is suppressed, and the sludge is prevented from getting into the seal members.

If the sludge gets into the seal section and adheres to the seal members, the sliding resistance increases, and the lower arm that supports the lower wire guide is distorted. Thus, the positioning accuracy of the machine is reduced, so that the machining accuracy worsens. Accordingly, means is provided for preventing the sludge from getting into the seal section, as described in Japanese Patent Application Laid-Open No. 4-159023 and International Publication WO 01/062423. Technically, however, it is very difficult to remove all the sludge that adheres to the seal members, and the cost of the wire-cut electric discharge machine is increased. Further, prolonged use never fails to increase the sliding resistance load and reduce the positioning accuracy.

Thus, it is ideal to clean and maintain the seal section frequently, in order to remove the sludge that adheres to the seal members. Actually, however, the construction of the seal section is so complicated that adjustment after the cleaning is difficult. In consequence, frequent maintenance is a heavy burden for ordinary users.

### SUMMARY OF THE INVENTION

The present invention relates to a wire electric discharge machine, in which a lower arm penetrates a slot formed in one side plate of a machining tank movable in an axial direction of the lower arm and a direction perpendicular to the axial direction, and which has a seal section configured to prevent a machining fluid from leaking out through the slot of the machining tank. The electric discharge machine comprises load detecting means for detecting a sliding resistance load at the seal section, determination means for determining whether or not a predetermined load is exceeded by the load detected by the load detecting means, and warning means which issues a warning to prompt maintenance of the seal section when the determination means concludes that the predetermined load is exceeded by the detected load.

The warning means may be a display unit, a signal lamp, or an alarm generator configured to generate an alarm sound.

The load detecting means may be configured to detect a load on a motor for driving the movable table.

The load detecting means may be composed of a disturbance estimation observer for estimating a load on a drive motor for driving the movable table.

The load detecting means may be a load cell attached to a member which is influenced by the sliding resistance load at the seal section.

In the electric discharge machine according to the present invention constructed in this manner, the sliding resistance load at the seal section is detected, and the timing for maintenance of the seal section is notified automatically. Thus, the maintenance can be performed to lighten the sliding resistance load at the seal section before the positioning accuracy of the machine and the machining accuracy are reduced.

### BRIEF DESCRIPTION OF THE DRAWINGS

The above and other objects and features of the present invention will be obvious from the ensuing description of embodiments with reference to the accompanying drawings, in which:
FIG. 1 shows a drive section of one embodiment of a wire electric discharge machine according to the present invention and a seal section of a machining tank;
FIG. 2 is a schematic block diagram mainly showing a controller of the wire electric discharge machine according to the one embodiment of the invention; and
FIG. 3 is a flowchart showing maintenance timing detection notification processing executed by a processor of the controller of FIG. 2 for each predetermined period during the operation of the wire electric discharge machine of FIG. 1.

### DETAILED DESCRIPTION OF THE PREFERRED EMBODIMENTS

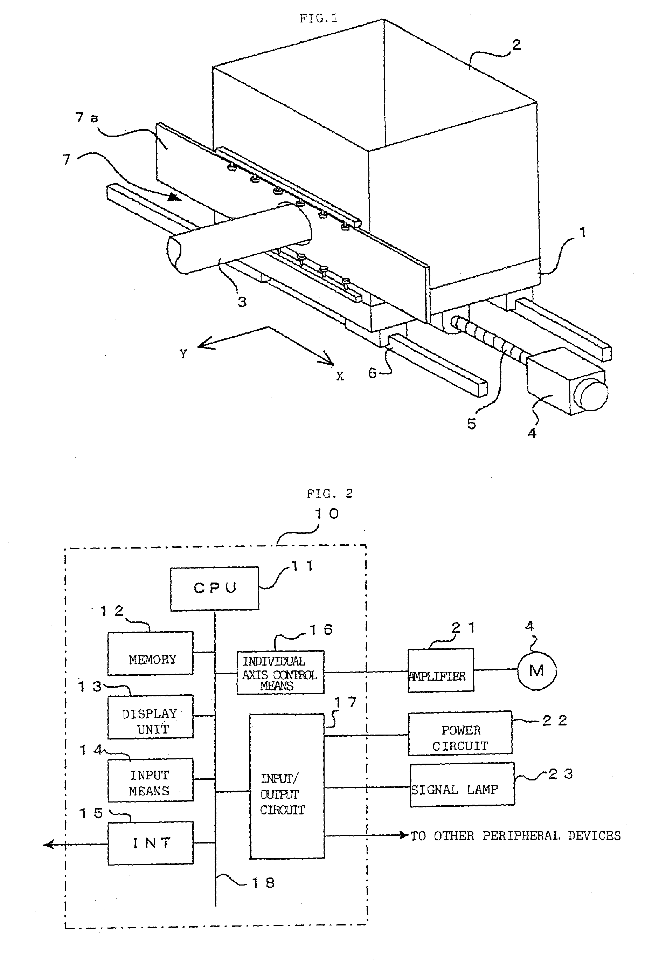

FIG. 1 shows a drive section of a wire electric discharge machine according to the present invention and a seal section of a machining tank, which are constructed in the same manner as those of a conventional wire electric discharge machine.

A machining tank 2 is fixed on a movable table 1. The tank 2 contains a workpiece cradle (not shown) on which a workpiece can be mounted and a jig (not shown). The workpiece is fixed on the workpiece cradle by the jig and is dipped in a machining fluid in the machining tank when it is machined. The movable table 1 is driven with respect to a lower arm 3 in the axial direction of the arm 3 and in a direction perpendicular to the axial direction and moves on a horizontal plane.

FIG. 1 shows only drive means (servomotor 4) that drives the movable table 1 in the direction of an X-axis that is perpendicular to the axial direction (Y-axis direction) of the lower arm 3. A ball screw 5 is coupled to an output shaft of the servomotor 4. The screw 5 is in mesh with a ball nut that is attached to the movable table 1. Thus, if the servomotor 4 is driven to rotate, its rotary motion is converted into a linear motion as the ball screw 5 and the ball nut are coupled together. Thereupon, the movable table 1 moves in the X-axis direction.

In FIG. 1, reference numeral 6 denotes a guide mechanism that guides the movable table 1 in movement in the X-axis direction.

Although not shown in FIG. 1, a drive mechanism (a servomotor and combination of ball screw and ball nut) is provided for moving the movable table 1 and the machining tank 2 thereon in the axial direction (Y-axis direction) of the lower arm 3.

A slot that extends long in the X-axis direction is formed in one side plate of the machining tank 2, and the lower arm 3 penetrates the slot. A lower wire guide (not shown) for guiding a wire electrode is provided on the distal end of the lower arm 3. A seal section 7 is located in a position opposite the slot in the machining tank 2 lest the machining fluid leak through the slot. The seal section 7 is composed of a seal member (on the machining tank side) mounted on the side plate of the machining tank 2 so as to surround the slot, a plate-shaped seal member 7a that presses the tank-side seal member against the one side plate of the machining tank 2, thereby sealing the slot, and the like. Further, another seal member seals a space between the plate-shaped seal member 7a and the lower arm 3 that penetrates the slot in the machining tank 2 and a circular hole in the seal member 7a.

When the servomotor 4 is driven, the movable table 1 and the machining tank 2 move in the X-axis direction with respect to the lower arm 3 and the plate-shaped seal member 7a. When the machining tank 2 moves relatively to the seal member 7a, the seal member of the seal section 7 that is attached to the side plate of the machining tank 2 slides with respect to the plate-shaped seal member 7a. As this is done, the slot in the side plate is sealed with the seal member 7a, so that the machining fluid never leaks out through the slot.

If the servomotor (not shown) for use as Y-axis drive means is actuated to drive the movable table 1 and the machining tank 2, moreover, the tank 2 slides in the Y-axis direction with respect to the lower arm 3. As this is done, the machining tank 2 is sealed with a seal portion between the lower arm 3 and the seal member 7a.

The machining fluid is put into the machining tank 2, and the workpiece is mounted on the workpiece cradle, which is attached to the movable table 1, and dipped in the machining fluid. Further, the wire electrode is stretched between the upper wire guide (not shown) and the lower wire guide on the distal end of the lower arm 3. The wire electrode is run between the upper and lower wire guides as the movable table 1 is driven in the X- and Y-axis directions by X- and Y-axis drive mechanisms so that the table moves in any desired direction on an XY-plane (horizontal plane). At the same time, voltage is applied between the wire electrode and the workpiece fixed on the movable table 1, whereupon electric discharge is generated such that the workpiece is subjected to electric discharge machining.

A sludge that is formed of a part of the workpiece removed by the electric discharge and a sludge produced by corrosion of the wire electrode scatter and float in the machining fluid. If the sludges get into the seal section 7, a sliding resistance load at the seal section increases, thereby distorting the lower arm 3. In consequence, the position of the lower wire guide that is attached to the distal end of the lower arm 3 fluctuates. Thus, the accuracy of positioning of the workpiece with respect to the wire electrode is reduced, so that the machining accuracy is also reduced.

According to the present embodiment, therefore, the sliding resistance load at the seal section 7 is detected, and it is determined whether or not a predetermined reference load is exceeded by the detected sliding resistance load. If it is concluded that the reference load is exceeded, an alarm is issued to prompt maintenance.

The detection of the sliding resistance load is achieved by detecting a load acting on the servomotor that moves the movable table 1 (or the workpiece). The position and velocity of the servomotor are controlled, and torque (drive current) for controlling the position or velocity is also controlled. In order to control the torque, the drive current of the servomotor is detected by means of a current detector, and the detected current is fed back for current loop control, whereby the servomotor is drivingly controlled. The drive current is proportional to the load on the servomotor as well as to the torque outputted by the servomotor. Thus, the timing for maintenance is determined by obtaining the sliding resistance load based on the value of the detected current (current feedback value) used for the current loop control.

Further, it is a well-known technique to provide servo control means for drivingly controlling the servomotor with a disturbance estimation observer that estimates the load on the servomotor by software processing. Accordingly, an increase of the sliding resistance load can be detected by obtaining the load on the servomotor by means of the disturbance estimation observer.

It is when the movable table 1 and the machining tank 2 are moved in the X-axis direction or the longitudinal direction of the slot in FIG. 1 that sludges adhere to the seal section 7 to increase the sliding resistance load, thereby influencing the positioning accuracy.

When the machining tank 2 moves with respect to the lower arm 3 in the axial direction (Y-axis direction) thereof, a sliding resistance load generated between the lower arm 3 and the seal member 7a by the movement is a force in the axial direction of the arm 3, so that the arm 3 is distorted little by the force. It is necessary, therefore, only that at least the load on the servomotor 4 for driving the X-axis be detected by its drive current or by means of the disturbance estimation observer.

FIG. 2 is a schematic block diagram mainly showing a controller of the wire electric discharge machine according to the one embodiment of the invention. Reference numeral 10 denotes a controller that is composed of a numerical controller that controls the wire electric discharge machine. The controller 10 comprises a processor 11 and other components including a memory 12, display unit 13, input means 14 such as a keyboard, interface 15, individual axis control means 16, input/output circuit 17, etc., which are connected to the processor 11 by a bus 18. The memory 12 is formed of a ROM, RAM, etc. Machining programs and the like are inputted from or outputted to an external storage medium through the interface 15.

The individual axis control means 16 controls servomotors that individually drive the X- and Y-axes for the movement of the movable table 1, mounted with the machining tank 2, in the X-axis direction and the Y-axis direction perpendicular thereto, a servomotor that drives a Z-axis for the movement of the upper wire guide in a direction perpendicular to both the X- and Y-axis directions, and servomotors that individually drive a U-axis and a V-axis perpendicular thereto for taper machining. Further, the individual axis control means 16 comprises position and velocity feedback control means and current feedback control means for those individual axes. The servomotors for the individual axes are connected to the individual axis control means 16 through servo amplifiers 21 for the individual axes. Although not shown in FIG. 2, a position/velocity detector is attached to each servomotor and configured to feed back a position and a velocity to each axis control circuit.

The input/output circuit 17 is connected with a power circuit 22, which applies voltage for generating electric discharge between the wire of the wire electric discharge machine and the workpiece, and a signal lamp 23 for notifying the timing for maintenance. Further, the input/output circuit 17 is connected with an automatic wire connection apparatus (not shown) for letting the wire electrode pass through a wire hole as a workpiece machining start hole, a wire electrode feeder for feeding the wire electrode, and other peripheral devices.

The configuration of the controller of the wire electric discharge machine shown in FIG. 2 is the same as that of the controller of a conventional wire electric discharge machine. The controller of the machine of the present invention utilizes the hardware of the controller of the conventional machine and is additionally provided with a new function for the notification of the maintenance timing.

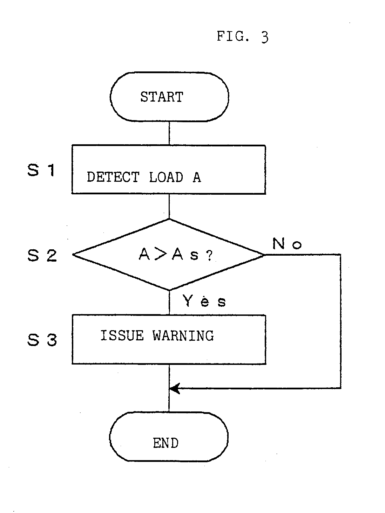

FIG. 3 is a flowchart showing maintenance timing detection notification processing executed by the processor 11 for each predetermined period during the operation of the wire electric discharge machine.

First, a load A that acts on the servomotor 4 for driving the X-axis is detected (Step S1). For obtaining this load from the drive current of the motor, the detected drive current value fed back from the current detector through the axis control means 16 is read. For estimating the load by means of the disturbance estimation observer, moreover, disturbance estimation observer processing is previously incorporated in servo control processing unit for the servomotor 4, mounted to the X-axis control means 16, and the load on the servomotor is estimated by using the disturbance estimation observer.

The load A obtained in this manner is compared with a predetermined reference load As (Step S2). If the reference load As is not exceeded by the obtained load A, this maintenance timing detection notification processing terminates. If the reference load As is exceeded by the obtained load A, a warning is issued, a message suggestive of arrival at the maintenance timing is displayed on the display unit 13, and the signal lamp 23 is lit by the input/output circuit 17, whereupon an operator is informed of the arrival at the maintenance timing (Step S3). The signal lamp 23 may be replaced with an alarm generator that generates an alarm sound to notify the maintenance timing.

The reference load As that serves as a criterion for the identification of the maintenance timing is obtained based on a feedback signal from the current detector in its best condition or on the load value estimated by the disturbance estimation observer, and is previously set and stored in the memory 12.

When maintenance is tried with a heavy object, such as the workpiece, on the movable table 1, however, the weight of the object or workpiece is measured in advance and inputted to the controller 10, and a correction amount of the reference load As is calculated from this weight and corrected. Alternatively, a correspondence table for the correction amount for the weight may be previously stored in a table format in the memory 12. In this case, the reference load As can be corrected by obtaining the correction amount corresponding to the inputted weight.

Thus, if the workpiece to be machined is mounted on the movable table 1 by means of the jig with the reference load As corrected by the weight of the object placed on the movable table 1, the jig need not be removed when the sliding resistance load is measured. In other words, the sliding resistance load can be measured to determine the maintenance timing without removing the jig or the workpiece.

Further, the load that acts on the servomotor 4 includes resistances from a guide mechanism and a feed mechanism, such as a ball screw/nut mechanism, as well as the sliding resistance load at the seal section 7. The degree of secular variation of the resistance load can be made much lower than that of the sliding resistance load at the seal section 7 by periodically supplying a lubricant by means of an automatic lubricating mechanism or grease nipples. Therefore, influences of any other parts than the seal section can be ignored in measuring the sliding resistance load at the seal section and in comparing the load with the reference load. After the feed mechanism or the like is maintained with the lubricant supply or after the seal section 7 is cleaned, moreover, the servomotor 4 is driven to detect the load (drive current value or estimated disturbance load), whereby the reference load As is obtained and set. By doing this, the reference load As can be updated to meet the machine conditions, so that the maintenance timing can be automatically appropriately notified as a warning even if the machine performance varies across the ages. Thus, the positioning accuracy cannot be reduced, so that reduction of the machining accuracy can be prevented.

Instead of detecting the load by detecting the drive current of the servomotor or by means of the disturbance estimation observer, moreover, the sliding resistance load at the seal section may be detected by means of a strain sensor, such as a load cell, provided in the place where the sliding resistance load at the seal section is received. In this case, the maintenance timing is determined depending on whether or not the detected load is heavier than the reference load.

In the wire electric discharge machine according to the embodiment described herein, furthermore, the machining tank is movable and the lower arm is fixed. However, the present invention is also applicable to a wire electric discharge machine of a type such that a machining tank is fixed and a lower arm is movable.

## Claims

1. A wire electric discharge machine, in which a lower arm penetrates a slot formed in one side plate of a machining tank movable in an axial direction of the lower arm and a direction perpendicular to the axial direction, and which has a seal section configured to prevent a machining fluid from leaking out through the slot of the machining tank, the wire electric discharge machine comprising:
load detecting means for detecting a sliding resistance load at the seal section;
determination means for determining whether or not a predetermined load is exceeded by the load detected by the load detecting means; and
warning means which issues a warning to prompt maintenance of the seal section when the determination means concludes that the predetermined load is exceeded by the detected load.

2. The wire electric discharge machine according to claim 1, wherein the warning means is a display unit, a signal lamp, or an alarm generator configured to generate an alarm sound.

3. The wire electric discharge machine according to claim 1, wherein the load detecting means detects a load on a motor for driving the movable table.

4. The wire electric discharge machine according to claim 1, wherein the seal section is composed of a machining-tank-side seal member mounted on the side plate of the machining tank so as to surround the slot and a plate-shaped seal member which presses the first seal member against the side plate of the machining tank, thereby sealing the slot, and the load detecting means is a current detector which detects a drive current of a motor for driving the movable table with respect to the lower arm in a longitudinal direction of the slot of the machining tank, perpendicular to the axial direction of the lower arm, thereby detecting a sliding resistance generated when the machining-tank-side seal member slides with respect to the plate-shaped seal member as the movable table is driven to move by the motor.

5. The wire electric discharge machine according to claim 1, wherein the load detecting means is composed of a disturbance estimation observer for estimating a load on a drive motor for driving the movable table.

6. The wire electric discharge machine according to claim 1 or 2, wherein the load detecting means is a load cell attached to a member which is influenced by the sliding resistance load at the seal section.
